# EUROPEAN PATENT APPLICATION

(11) **EP 2 587 241 A2**
(43) Date of publication of application: **01.05.2013**
(21) Application number: 12188245.0
(22) Date of filing: 11.10.2012
(51) Int. Cl.: G01L 9/00, G01L 19/06, G01L 19/14

(54) **Sensor with fail-safe media seal**

(30) Priority: 25.10.2011 US 201113281183
(71) Applicant: Honeywell International Inc., Morristown, NJ 07962-2245 (US)
(72) Inventor: Rozgo, Paul, Morristown, NJ 07962-2245 (US); Jones, Ryan, Morristown, NJ 07962-2245 (US)
(74) Representative: Houghton, Mark Phillip

(57) **Abstract**

The present disclosure relates to sensors that are exposed to media during use. In some cases, a sensor assembly includes a sensor element positioned on a substrate, where the sensor element may be mechanically and electrically connected to the substrate and may be in fluid communication with a media inlet port. The sensor assembly may include a cover sealed to the substrate of the sensor assembly to enclose the sensor element in a sealed chamber. In some instances, the sensor assembly may include a bonding layer on the substrate of the sensor assembly, and the cover may be sealed to the bonding layer to form the sealed chamber. In some instances, the sealed chamber may help provide a fail-safe media seal for the sensor assembly in the event the sensor element forms a leak during use.

## Description

### TECHNICAL FIELD

The present disclosure relates generally to sensors, and more particularly, to sensors that are exposed to media during use.

### BACKGROUND

Sensors are commonly used today to sense environmental parameters such as temperature, humidity, pressure, flow, thermal conductivity, gas concentration, as well as many other environmental parameters. Such sensors are used in a wide variety of applications including, for example, medical applications, flight control applications, industrial process applications, combustion control applications, weather monitoring applications, water metering applications, as well as many other applications.

### SUMMARY

This disclosure relates generally to sensors, and more particularly, to sensors that are exposed to media during use.

One illustrative sensor assembly may include a pressure sensor assembly. While a pressure sensor assembly is used here as an example, it should be recognized that any form of sensor that is exposed to a media during use may be used. An illustrative pressure sensor assembly may have a pressure port that places a pressure sense element in fluid communication with the media to be sensed. The sense element may sense the application pressure of the media, and may output a measure that is related to the sensed application pressure.

The pressure sensor assembly may include a cover that is configured to help enclose and seal the sense element in a sealed chamber. The cover may be configured to withstand the application pressure in the event that the sense element should leak or become dislodged from the pressure port thereby exposing the sealed chamber to the application pressure and media. This may enhance the safety of the pressure sensor assembly, particularly when the media is toxic, acidic, or otherwise possibly dangerous to personnel and/or surrounding equipment. The sealed chamber may also help increase the reliability of an overall system that uses the pressure sensor assembly by maintaining system pressure even if the sensing element of the pressure sensor assembly develops a leak (e.g. bursts) or become dislodged from the pressure port during use.

In some instances, a pressure sensor assembly may include a substrate, a sensor sub-assembly secured to the substrate, one or more wire bonds electrically connecting the sensor sub-assembly to the substrate, a bonding layer formed on the substrate and a cover affixed to the bonding layer, where the cover and substrate are configured to enclose and seal the sense element and the one or more wire bonds in a sealed chamber. The substrate may have an opening extending from a backside thereof to a front side thereof, such that a pedestal of a pressure port of the sensor sub-assembly may extend into the opening of the substrate. The sensor sub-assembly may further include a sense element secured to the pressure port, where the sense element may be in fluid communication with a pressure port conduit extending from a pressure input port of the pressure sensor assembly, through the pedestal to the sense element. The wire bonds of the assembly may electrically connect one or more electrical terminals of the sense element to one or more wire bond pads on the front side of the substrate. Further, the bonding layer may be formed on the front side of the substrate around a perimeter of the sense element and the one or more wire bond pads.

A cover may be affixed relative to the substrate, and the cover may form a continuous seal with the substrate, where the continuous seal may extend entirely around the sensor element. The cover may be sealed to the substrate to form a sealed chamber enclosing the sense element therein. The sealed chamber may be configured to contain leaked media in the event that, for example, a burst pressure of the sense element is reached and media bursts through the sense element and into the sealed chamber. The cover may be configured to withstand a predetermined application pressure applied to the sense element in the event the sense element should form a leak (e.g. burst) or become dislodged from the pressure port during use.

In some instances, and although not required, a compensation circuit for the sense element may not be included within the sealed chamber. This may help reduce the size of the cover (and sealed chamber), which may help increase the application pressure that the cover can withstand should the sense element leak (e.g. burst) or become dislodged from the pressure port.

The preceding summary is provided to facilitate an understanding of some of the innovative features unique to the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative embodiments of the disclosure in connection with the accompanying drawings, in which:
FIG. 1 is a schematic cross-sectional view of an illustrative pressure sensor assembly including a cover;
FIG. 2 is a schematic top view of the illustrative pressure sensor assembly of FIG. 1 with the cover removed;
FIG. 3 is a schematic cross-sectional view of an illustrative pressure sensor assembly in an illustrative application;
FIG. 4A is a magnified schematic view of a portion of the illustrative pressure sensor assembly of FIG. 1 showing a connection between a cover and a substrate;
FIG. 4B is a magnified schematic view of a portion an illustrative pressure sensor assembly showing a connection between a cover and a substrate; and
FIG. 4C is a magnified schematic view of a portion an illustrative pressure sensor assembly showing another connection between a cover and a substrate.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described herein. On the contrary, the intention is to cover all modifications, equivalents, and alternatives falling within the spirit and scope of the disclosure.

### DESCRIPTION

The following description should be read with reference to the drawings wherein like reference numerals indicate like elements throughout the several views. The description and drawings show several embodiments which are meant to be illustrative of the disclosure.

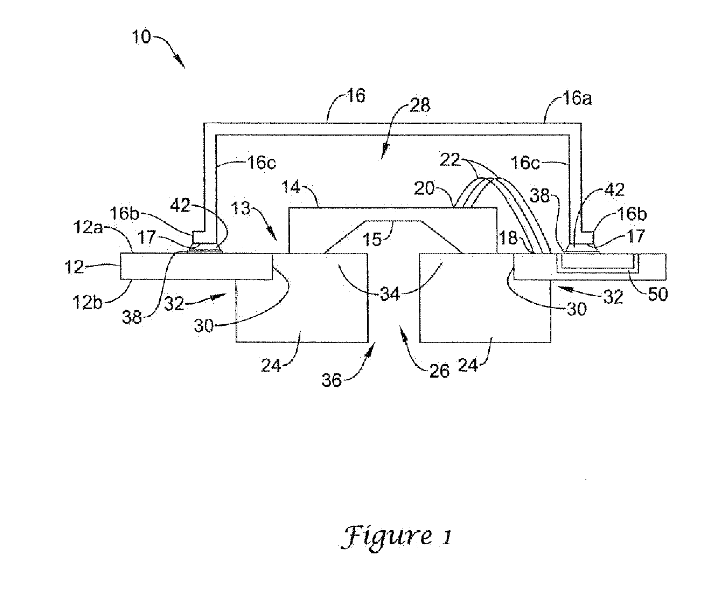

Referring to the Figures, and in one illustrative embodiment, a pressure sensor assembly is shown. While a pressure sensor assembly is used here as an example, it should be recognized that any form of sensor that is exposed to a media during use may be used. The illustrative pressure sensor assembly 10 of FIG. 1 includes a substrate 12 having a front side 12a and a back side 12b, a sensor or sense element 14 in communication with a pressure port conduit 26 of a pressure port 24, wherein the pressure port is secured to the back side 12b of the substrate 12, and a cover 16 affixed relative to substrate 12. Cover 16 may be affixed relative to substrate 12 so as to enclose and seal the back side of sense element 14 within a sealed chamber 28.

Sense element 14 may be any type of sense element, and in an illustrative embodiment, sense element 14 is pressure sense element such as an absolute pressure sense element, a gauge pressure sense element, or other pressure sense element as desired. Example sense elements may include, but are not limited to, those described in U.S. patents: 7,503,221; 7,493,822; 7,216,547; 7,082,835; 6,923,069; 6,877,380, and U.S. patent application publications: 2010/0180688; 2010/0064818; 2010/00184324; 2007/0095144; and 2003/0167851, all of which are hereby incorporated by reference.

Substrate 12 may have one or more traces or wire bond pads 18 on front side 12a of substrate 12, and sense element 14 may include one or more electrical terminals 20. Terminal(s) 20 may be electrically connected to trace(s) or pad(s) 18 on the substrate 12 by any known electrical connection technique. For example, and in the illustrative embodiment, wire bonds 22 or other electrical connectors may be utilized to electronically connect electrical terminal(s) 20 to bond pad(s) 18.

Substrate 12, made of any suitable material (e.g., metal, ceramic, etc.), of pressure sensor assembly 10 may include an opening defined at least partially by an interior edge 30, where the opening may extend from front side 12a to back side 12b of the substrate 12. A sensor sub-assembly 13 may include sense element 14 and pressure port 24, where sensor sub-assembly 13 may extend into and/or through the opening of substrate 12, and pressure port 24 may be secured to back side 12b of substrate 12 at a pressure port-substrate interface 32, as seen in FIG. 1. Alternatively, pressure port 24 and substrate 12 may be formed of a single piece of material, which may obviate the need for creating a connection or interface between pressure port 24 and substrate 12.

In some cases, pressure port 24 may include a pedestal 34 that extends into the opening defined by interior edge 30 of substrate 12, where pedestal 34 and the opening of substrate 12 may be configured to position sense element 14 adjacent the front side 12a of the substrate 12. Pressure port 24 may define a pressure port conduit 26, where pressure port conduit 26 may extend from pressure input port 36, through pedestal 34, and to the back side of sense element 14.

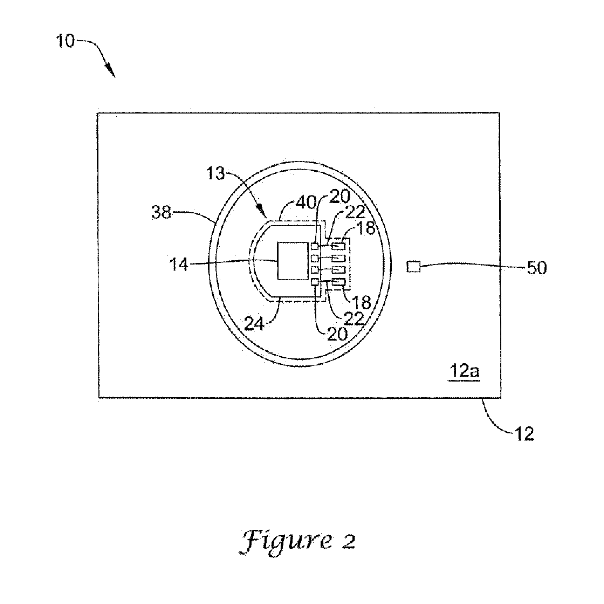

As seen in FIG. 2, substrate 12 may include a ring or bonding layer 38 formed on or adjacent to the front side 12a of substrate 12 and around a perimeter (dotted line 40 shown extended from the perimeter for clarity) of sense element 14 and trace(s) or pad(s) 18. The ring or bonding layer 38 need not be round in shape. Instead, it is contemplated the ring or bonding layer 38 may assume any desired shape. Cover 16 may be affixed to ring or bonding layer 38 so as to enclose and seal sense element 14, and in some cases, one or more wire bonds 22, within a sealed chamber 28 (see FIGS. 1 and 2). In some instances, and although not required, a compensation circuit (not shown) for the sense element 14 may not be included within the sealed chamber 28. This may help reduce the size of the cover 16 and sealed chamber 28, which may help increase the application pressure that the cover 16 can withstand should the sense element 14 leak (e.g. burst) or become dislodged from the pressure port 24.

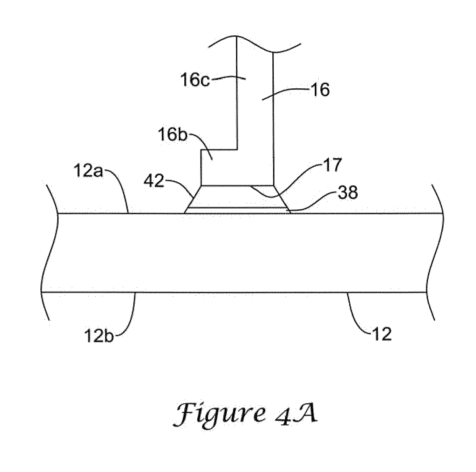

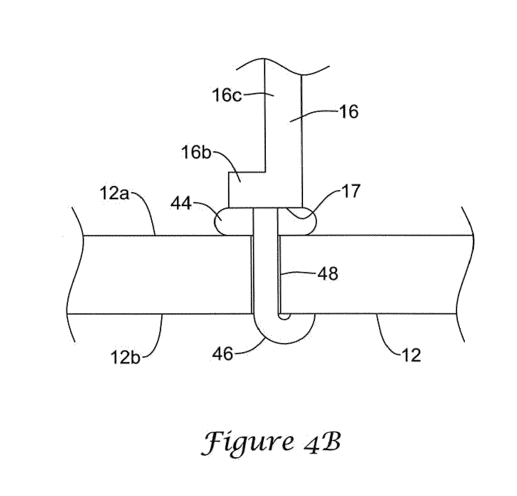

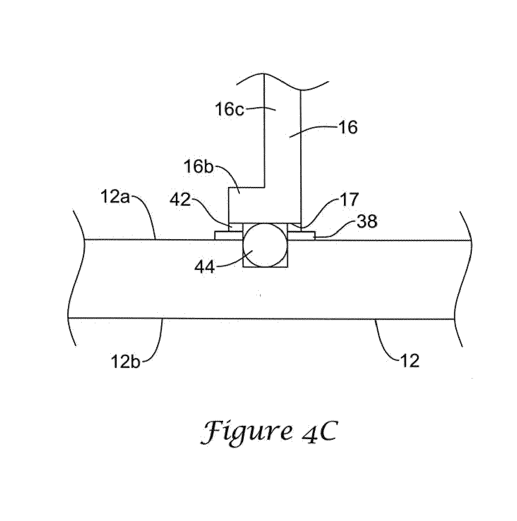

In some cases, ring or bonding layer 38 may have a same or similar circumference (if round in shape) or dimensions (if some other shape) as cover 16 to facilitate a seal between substrate 12 and cover 16. The seal may include solder 42 (e.g., FIG. 4A), an o-ring 44 (e.g., FIG. 4B), an o-ring 44 and solder or adhesive (e.g., FIG. 4C), or any other suitable sealing material or construction, as desired.

In some cases, seal or bonding layer 38 may be any shape or size and may be symmetrical or asymmetrical. For example, bonding layer 38 may be symmetric about a central axis in an area defined by a continuous bonding layer 38, where the area defined by continuous bonding layer 38 may be placed immediately around the various sensor components, which in some cases may be limited to sense element 14, wire bonds 22 and bond pads 18. In addition, it is contemplated that ring or bonding layer 38 may be any suitable material; for example, bonding layer 38 may include a metal layer, a solder layer, an adhesive, or any other suitable layer or layer combination as desired.

Cover 16 may take on any shape or size configured to enclose sense element 14, and in some cases wire bond(s) 22 and bond pad(s) 18, within sealed chamber 28 formed by sealing cover 16 with substrate 12. For example, cover 16 may be a metal cover including a top 16a, a flared bottom ring 16b, a sidewall extending between top 16a and flared bottom ring 16b, where flared bottom ring 16b may be affixed to bonding layer 38 on the front side 12a of substrate 12. However, this is just one example, and it should be understood that cover 16 may take on any suitable shape, size and configuration to form sealed chamber 28. In some cases, cover 16 and flared bottom ring 16b may have a circumference (when round in shape) substantially the same shape as or similar to bonding layer 38, as desired.

Cover 16 may be made from or configured from any suitable material. For example, cover 16 may be configured to be of a robust material capable of being rigidly affixed to substrate 12 so as to withstand an application pressure applied to sense element 14 through pressure port conduit 26 of pressure port 24 in the event sense element 14 may burst or leak or be dislodged from pressure port 24. Although cover 16 may be configured and affixed to substrate 12 so as to withstand positive and/or negative application pressures applied thereto, cover 16 may be configured in a manner particularly suited to remain structurally intact and mechanically affixed to substrate 12 in the event positive application pressures (e.g., application pressures acting on cover 16 in a direction substantially opposite forces maintaining the connection between cover 16 and substrate 12) are applied thereto. Illustrative materials of cover 16 may include, but are not limited to, metals, plastics and composites, among other materials configured to withstand suitable application pressures. Application pressures may depend on the particular application. For example, typical application pressure may be within a range of 0 psi (pounds per square inch)-1.0 psi, 1.0 psi-9.0, 15 psi-20 psi, 0 psi to 1,000 psi, 100 psi-500 psi, 1,000 psi-5,000 psi, 0 psi to 10,000 psi, etc. or may have an absolute value greater than 5,000 psi depending on the application in which pressure sensor assembly 10 may be used.

Alternatively, or additionally, cover 16 may be configured to withstand a burst pressure of sense element 14. A burst pressure is generally known as a pressure value at which sense element 14 may be expected to burst and/or leak and application pressures may reach and/or exceed a burst pressure. Although a burst pressure may be any pressure amount relative to an application pressure or other reference amount, an illustrative burst pressure of sense element 14 may be three times the expected application pressure. For example, if an application pressure is 1,000 psi, the burst pressure of sense element 14 may be at least 3,000 psi or another multiple of the application pressure. In the example, cover 16 may be configured to withstand the application pressure of 1,000 psi and the illustrative burst pressure of 3,000 psi. An illustrative material for cover 16 may be a metallic material configured to withstand 3,000 psi of pressure without mechanically failing (e.g., leaking fluid). In some instances, the cover 16 made from the illustrative material may be formed and/or stamped from a metal plate having a requisite gauge to form a cover that can seal sense element 14 (and in some cases wire bond(s) 22 and bond pad(s) 18) within sealed chamber 28, and can withstand the requisite application pressures that might enter sealed chamber 28 upon failure of the sense element 14 or other component.

Bonding layer 38 may be metallic or may be made of another suitable material configured to facilitate creating a sealed connection between cover 16 and substrate 12. The metallic material of bonding layer 38 may contact side 17 of cover 16, and cover 16 may be sealed to bonding layer 38, as seen, for example, in FIGS. 4A, 4B and 4C. Although a layer of material (e.g., a solder 42, FIG. 4A, o-ring 44, FIG. 4B, o-ring 44 and solder or adhesive, FIG. 4C, or other connection and sealing material) may be placed at least partially between contact side 17 of cover 16 and bonding layer 38, contact side 17 and bonding layer 38 may be considered to be in contact with one another. The sealed connection may be a rigid connection or any other connection, where a rigid connection may be a connection configured to maintain its connection when at least an application pressure of the system is applied thereto. Further, examples of suitable connections may include, but are not limited to, mechanical connections of a weld connection, a solder connection, an adhesive connection, among other types of connections.

Alternatively or additionally, a connection may be formed between cover 16 and substrate 12 through a mechanical connection utilizing an o-ring 44 as a layer placed at least partially between contact side 17 and bonding layer 38, as seen in FIG. 4B. In one example, cover 16 may include a pin 46 extending from cover 16 toward a through hole 48 in substrate 12. In the example, o-ring 44 may be configured and positioned between front side 12a of substrate 12 and contact side 17 of cover 16 to facilitate forming sealed chamber 28. Pin 46 may extend through o-ring 44 and hole 48 in substrate 12 and may be bent or formed to mechanically connect and seal cover 16 to substrate 12. Optionally, an adhesive, weld, solder or other type of seal may be applied to the formed pin 46 and back side 12b of substrate 12 for forming the connection between cover 16 and substrate 12. O-ring 44 may be utilized for any purpose; for example, o-ring 44 may be utilized to facilitate forming sealed chamber 28, such that sealed chamber 28 may withstand application pressures applied to the pressure sensor assembly 10 and a burst pressure of sense element 14 without leaking of media out of the sealed chamber 28.

Alternatively or additionally, a connection may be formed between cover 16 and substrate 12 through a mechanical connection utilizing an o-ring 44 in conjunction with a solder, weld or adhesive connection, as seen in FIG. 4C. In this example, substrate 12 and/or contact side 17 of cover 16 may include a groove for accepting an o-ring 44, where the o-ring 44 becomes slightly compressed when the contact side 17 of the cover is brought into engagement with the substrate 12. In some cases, a bonding layer 38 may be placed adjacent to the groove, and the contact side 17 of the cover 16 may be secured to the bonding layer 38. The contact side 17 of the cover 16 may be secured to the bonding layer 38 by a solder connection, a weld connection, an adhesive connection, or any other suitable connection, as desired.

As discussed, cover 16 and substrate 12 may be sealingly connected to form sealed chamber 28. Sealed chamber 28 may be configured to enclose the back side of sense element 14, and sometimes wire bond(s) 22, bond pad(s) 18) and at least a portion of at least one electrical signal feed 50. In some instances, the components added to front side 12a of substrate 12 and enclosed within sealed chamber 28 may be limited to sense element 14, wire bond(s) 22, pad(s) 18 and/or electrical signal feed 50. In a further illustrative instance, sealed chamber may be configured so as to enclose sense element 14, wire bond(s) 22, bond pad(s) 18 and electrical signal feed 50, while attempting to minimize the volume of sealed chamber 28, yet still have a functional cover 16. Other factors to consider when configuring cover 16 (e.g., a functional cover 16), and sealed chamber 28 may include, but are not limited to, symmetry of cover 16, cost of manufacturing cover 16, ease of use of cover 16 in manufacturing processes, and other similar or different factors.

It is contemplated that sealed chamber 28 may be void of any through-holes, other than the opening through which pedestal 34 of pressure port 24 may extend and plug or fill, so as to avoid media escaping sealed chamber 28 in the event media leaks from pressure port conduit 26 and into the sealed chamber 28. In one example, an area of front side 12a of substrate 12 defined by bonding layer 38 may include one and only one opening, where the one and only one opening is sealed from sealed chamber 28 by pressure port 24 and sense element 14 of sensor sub-assembly 13 (see FIG. 1). Although an area of front side 12a of substrate 12 may lack through-holes in communication with sealed chamber 28, the area of front side 12a of substrate 12 lacking through-holes may include sealed vias in communication with sealed chamber 28. Any sealed vias may be configured to withstand pressure levels within sealed chamber 28. In addition to the lack of other through-holes within substrate 12, the opening in substrate 12 in which pedestal 34 of pressure port 24 may extend may be sealed at or near pressure port-substrate interface 32. The seal at or near pressure port-substrate interface 32 may include a solder seal, a weld seal, an adhesive seal and/or another type of seal configured to withstand application and burst pressures associated with the particular application of pressure sensor assembly 10. Further, pressure port-substrate interface 32 may include respective interfaces to facilitate different types of seals, such as a solder seal interface, a weld seal interface, or an adhesive seal. Illustratively, a solder seal interface may include metallic layers applied to substrate 12 and/or pressure port 24 to facilitate a solder seal at or near pressure port-substrate interface 32.

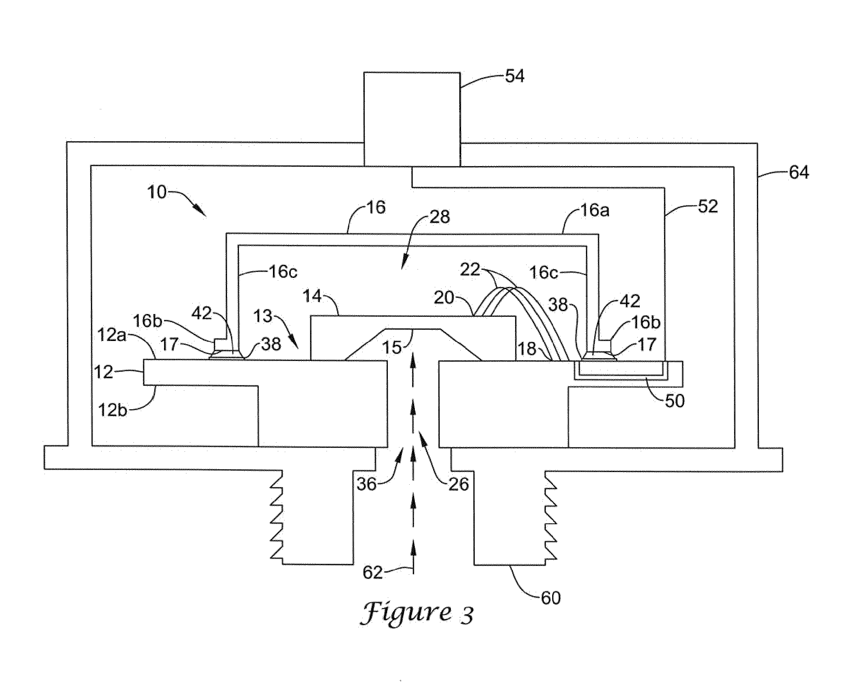

While not required, pressure sensor assembly 10 may include an electronic signal feed 50, as seen in FIGS. 1-3. Electronic signal feed 50 may be of any material configured to send and/or receive an electronic signal; for example, electronic signal feed 50 may be an electrically conductive metallic material. Electronic signal feed 50 may extend from or near front side 12a of substrate 12 within sealed chamber 28 to a position at or near front side 12a (or back side 12b) of substrate 12 exterior to sealed chamber 28, or may travel another desired path. Illustratively, electronic signal feed 50 may be utilized to electrically connect trace(s) or bond pad(s) 18 interior to sealed chamber 28 to metal connectors (e.g., pads, wires 52, etc.) or electronic devices (e.g., compensation circuit, etc.) or other external electrical connections and/or connectors 54 exterior to sealed chamber 28, as seen in FIG. 3. Electronic signal feed 50 may extend into substrate 12 (as seen in FIGS. 1 and 3) and/or may be applied to front side 12a of substrate 12.

Pressure sensor assembly 10 may be utilized to help prevent leakage of a media (e.g. fluid) applied to a pressure sensor where the media may leak from or burst through sense element 14 to which it is applied, or by some other failure mechanism. A method of preventing leakage of leaked media may be realized from the disclosure herein. For example, leakage of the leaked media may be prevented or hindered through affixing sense element 14 relative to substrate 12, where sense element 14 may include a diaphragm 15 that may be exposed to an application pressure through a pressure port conduit 26 of a pressure port 24 extending through the opening in substrate 12 that is at least partially defined by interior sides or edges 30 of substrate 12. Once, or at another desired time, sense element 14 has been positioned adjacent front side 12a of substrate 12, sense element 14 may be wire bonded to a printed circuit board or substrate 12, where the wire bond(s) 22 may at least electrically connect sense element 14 to bond pad(s) 18. Sense element 14, and in some cases wire bond(s) 22 and bond pad(s) 18, may then be enclosed and sealed within in sealed chamber 28, which may be substantially entirely defined by cover 16 and substrate 12. Sealing sense element 14 within sealed chamber 28 may include affixing cover 16 to substrate 12 utilizing techniques discussed herein (e.g., a weld connection, a solder connection, a pin connection, another mechanical connection, etc.) or other affixing and/or sealing techniques configured to withstand expected application pressures applied to and/or burst pressures of sense element 14. For example, cover 16 may be mechanically sealed to substantially an entirety of bonding layer 38 to seal sealed chamber 28 from atmospheric pressure and/or the environment exterior to sealed chamber 28. Moreover, in this and other illustrative methods of preventing leakage of leaked media through a pressure sensor, sealed chamber 28 may be configured to contain leaked media applied to sense element 14 in the event a burst pressure of sense element 14 is reached and fluid bursts through sense element 14 and into sealed chamber 28.

FIG. 3 is a schematic cross-sectional view of an illustrative pressure sensor assembly in an illustrative application. As seen in FIG. 3, an illustrative pressure sensor assembly 10 may be placed or utilized within a housing 64 connected to a pressure port 60 made at least partially of stainless steel, aluminum, or other material configured to operate as a pressure port. Housing 64 may include an external electrical connector 54, which may be configured to connect to external electrical devices. Electrical signal feed 50 of pressure sensor assembly 10 may be in electrical communication with electrical connector 54 through electrical wires 52, where electrical wires may extend from electrical signal feed 50 to connector 54. Alternatively and/or additionally, electrical signal feed 50 may be in wireless communication with external electrical connector 54 through the use of a wireless interface (not shown) or other wireless connection generally known in the art.

It is contemplated that pressure sensor assembly 10 may be connected to a pressure supply (not shown) at or near application pressure port 60. In the illustrative embodiment, pressure sensor assembly 10 may include an absolute pressure and/or a sealed gauge sensor, where sealed chamber 28 may be sealed from atmospheric pressure, or pressure sensor assembly 10 may be a different or similar sensor assembly type, as desired. Pressure supply may apply an application media 62 at an application pressure through application pressure port 60, pressure input port 36 and pressure port conduit 26 to diaphragm 15 of sense element 14. Sense element 14 may sense and measure the application pressure of the media 62, and transmit electrical signals to external electrical connector 54 from an interior of sealed chamber 28 via wire bond(s) 22, pad(s) 18, electrical signal feed 50 and wires 52 (or through a wireless connection). Sealed chamber 28 may operate to enclose the back-side of sense element 14, wire bond(s) 22 and pad(s) 18 in a sealed manner. Such configuration of sealed chamber 28 may operate to contain the media within the sealed chamber 28 formed by cover 16 and substrate 12 in the event the media 62 leaks through sense element 14 and into the sealed chamber 28. For example, media 62 may leak through sense element 14 if the application pressure of media 62 exceeds a burst pressure of the sense element. In the event the burst pressure is exceeded, and media 62 leaks through sense element 14, the leaked media 62 may be contained within sealed chamber 28. Such containment of leaked media 62 may prevent contamination of electrical and/or mechanical parts within housing, and/or of parts and personnel that may come into contact with leaked media 62.

As can be seen, the cover may help provide a fail-safe media seal for the pressure sensor assembly 10. This may enhance the safety of the pressure sensor assembly 10, particularly when the media 62 is toxic, acidic, or otherwise possibly dangerous to personnel and/or surrounding equipment. The sealed chamber 28 may also help increase the reliability of an overall system that uses the pressure sensor assembly 10 by maintaining system pressure even if the sense element 14 of the pressure sensor assembly 10 develops a leak (e.g. bursts) or become dislodged from the pressure port during use.

Having thus described several illustrative embodiments of the present disclosure, those of skill in the art will readily appreciate that yet other embodiments may be made and used within the scope of the claims hereto attached. It will be understood that this disclosure is, in many respects, only illustrative. Changes may be made in details, particularly in matters of shape, size, and arrangement of parts without exceeding the scope of the disclosure. The disclosure's scope is, of course, defined in the language in which the appended claims are expressed.

## Claims

1. A pressure sensor assembly having a pressure input port for receiving media applying an application pressure, the pressure sensor assembly comprising:
a substrate having a front side and a back side;
a sensor element having a burst pressure, the sensor element having one or more electrical terminals connected to one or more wire bond pads on the front side of the substrate, and wherein the sensor element is exposed to the application pressure through a pressure port conduit that extends out the back side of the substrate;
a cover affixed relative to the substrate, the cover and substrate are configured to enclose and seal the sense element in a sealed chamber; and
wherein the cover and the substrate are configured to contain the media in the sealed chamber should the media enter the sealed chamber in the event the application pressure exceeds the burst pressure causing the sensor element to burst.

2. The pressure sensor assembly of claim 1, wherein the cover is configured to be of a robust material and rigidly affixed to the substrate so as to withstand the application pressure applied to the sense element in the event the sense element should form a leak.

3. The pressure sensor assembly of claim 2, wherein the application pressure is greater than 5000 psi.

4. The pressure sensor assembly of claim 1, further comprising:
a bonding layer formed on the front side of the substrate around a perimeter of the sense element and the one or more wire bond pads; and
wherein the bonding layer is metallic, and wherein a contact side of the cover contacts the bonding layer and is sealed to the bonding layer using a rigid connection.

5. The pressure sensor assembly of claim 4, wherein the rigid connection is one of a weld connection and a solder connection.

6. The pressure sensor assembly of claim 4, wherein the cover is a metal cover that includes a top, a flared ring, and a sidewall extending between the top and the flared ring, wherein the flared ring is affixed to the bonding layer of the substrate.

7. The pressure sensor assembly of claim 1, further comprising an o-ring configured to facilitate a seal between the cover and the substrate.

8. The pressure sensor assembly of claim 1, further comprising:
a pressure port secured to the sense element and the back of the substrate at a pressure port-substrate interface, the pressure port having a pedestal that extends into an opening of the substrate extending from the front side of the substrate to the back side of the substrate, the pressure port further including the pressure port conduit; and
wherein the pressure port conduit extends from the pressure input port of the pressure sensor assembly, through the pedestal, and to the sense element;
wherein the pedestal positions the sense element adjacent the front side of the substrate;
and
wherein the substrate does not include any other openings into the sealed chamber other than the opening through which the pedestal of the pressure port extends.

9. The pressure sensor assembly of claim 8, wherein the opening in the substrate for which the pedestal of the pressure port extends is sealed by the pressure port-substrate interface.

10. The pressure sensor assembly of claim 9, wherein the pressure port-substrate interface includes a solder interface.

11. The pressure sensor assembly of claim 9, wherein the pressure port-substrate interface includes a welded interface.

12. The pressure sensor assembly of claim 9, wherein the pressure port-substrate interface includes an adhesive interface.

13. The pressure sensor assembly of claim 1, wherein:
the cover is a metal cover that is stamped from a metal plate, and
the metal plate has a gauge such that the stamped cover is configured to withstand the application pressure applied to the sense element in the event the sense element should form a leak.

14. A method of preventing leakage of a fluid in a pressure sensor, the method comprising:
affixing a sense element relative to a substrate, wherein the sense element includes a diaphragm that is exposed to an application pressure through a pressure conduit that extends through an opening in the substrate; and
sealing the sense element within a sealed chamber, the sealing step including affixing a cover to the substrate such that the cover does not separate from the substrate in the event the sealed chamber becomes exposed to the application pressure in the event of a leak between the pressure conduit and the sealed chamber.

15. The method of claim 14, wherein the sealed chamber is configured to contain leaked fluid in the event a burst pressure of the sense element is reached and fluid bursts through the sense element and into the sealed chamber.
